# EUROPÄISCHE PATENTSCHRIFT

(11) **EP 0 646 765 B1**
(45) Veröffentlichungstag und Bekanntmachung des Hinweises auf die Patenterteilung: **22.07.1998**
(21) Anmeldenummer: 94114475.0
(22) Anmeldetag: 14.09.1994
(51) Int. Cl.: G01B 5/00, G01B 3/00, G01B 21/02

(54) **Positionsmesseinrichtung**
Position measuring device
Dispositif de mesure de position

(30) Priorität: 02.10.1993 DE 4333651
(43) Veröffentlichungstag der Anmeldung: 05.04.1995
(73) Patentinhaber: Dr. Johannes Heidenhain GmbH, D-83292 Traunreut (DE)
(72) Erfinder: Nelle, Günther, Dr., D-83346 Bergen (DE)

(56) Entgegenhaltungen:
- EP-A- 0 092 664
- DE-A- 3 930 377
- DE-A- 4 101 579
- DE-U- 8 332 468
- US-A- 5 095 756

## Beschreibung

Die Erfindung bezieht sich auf eine gekapselte Positionsmeßeinrichtung gemäß dem Oberbegriff des Patentanspruches 1.

Derartige Positionsmeßeinrichtungen können als Längen- oder Winkelmeßeinrichtungen ausgeführt sein, die nach den verschiedensten physikalischen Prinzipien arbeiten.

Die Positionsmeßeinrichtungen werden an Maschinen eingesetzt, um die Relativlage zweier oder mehrerer Maschinen-Bauteile zu bestimmen.

Bei gekapselten Positionsmeßeinrichtungen ist es erforderlich, im Gehäuse einen Längsschlitz vorzusehen, durch den ein Mitnehmer ins Innere des Gehäuses hineinragen kann, um die dort befindliche Baueinheit zum Abtasten der Meßteilung mit dem außerhalb des Gehäuses angebrachten Montagefuß zu verbinden. Bei Relativbewegungen von beispielsweise Bett und Schlitten einer Maschine wird die Maschinenbewegung auf die Meßteilung bzw. die Abtastbaueinheit übertragen, wobei der Mitnehmer innerhalb des Schlitzes in Bewegungsrichtung relativ verfahren und die Bewegung gemessen wird.

Zum Schutze der hochempfindlichen Meßteilung muß der Schlitz im Gehäuse möglichst gut verschlossen sein, und nur im Bereich des Mitnehmers soll eine Durchtrittsmöglichkeit zum Inneren des Gehäuses gegeben sein.

Eine derartige Meßeinrichtung zeigt beispielsweise die DE-C-28 46 768 und die DE-A-41 01 579, bei der ein Maßstab und eine Abtasteinheit in einem Hohlkörper eingebracht sind, der einen in Meßrichtung durchgehenden Schlitz aufweist, welcher mittels dachförmig angeordneter Dichtelemente in Form von Kunststoff- oder Gummilippen verschlossen ist, durch die ein Mitnehmer hindurchgreift, um die Abtasteinheit mit einem zu messenden Objekt zu verbinden.

Aus der DE-A-15 48 871 ist es bekannt, ein Gehäuse einer Meßeinrichtung mit metallischen Dichtelementen abzudichten, deren Steifigkeit jedoch zu groß ist, um genügend Anschmiegsamkeit an den Mitnehmer zu ermöglichen.

Aus der DE-C-32 15 334 ist eine gekapselte Positionsmeßeinrichtung bekannt, bei der die elastischen Dichtelemente aus nichtmetallischem Werkstoff in Form von Misch-Fasern bestehen, die zur Abschirmung elektromagnetischer Störeinflüsse Metallfasern enthalten können.

Aus der DE 39 30 377 Al ist eine gattungsfremde Dichtungsanordnung zwischen Gehäusen und zugehörigem Deckel bekannt. Diese Dichtungsanordnung kann aus einem nichtmetallischen Werkstoff bestehen, auf dessen Oberfläche eine leitfähige Schicht aufgedampft ist.

Der Erfindung liegt die Aufgabe zugrunde, eine Positionsmeßeinrichtung zu schaffen, bei der die Abdichtung des Gehäuseschlitzes mechanisch und elektrisch widerstandsfähig ist und bei der auch die elektrischen Abschirmeigenschaften in hinreichendem Maße gegeben sind.

Diese Aufgabe wird durch eine Positionsmeßeinrichtung mit den Merkmalen des Patentanspruches 1 gelöst.

Die besonderen Vorteile der erfindungsgemäßen Abdichtung der Positionsmeßeinrichtung liegen in der nahezu vollkommenen elektrischen Abschirmung nach Art eines Faradaykäfigs.

Welche der vielfältigen Möglichkeiten, die durch die Unteransprüche aufgezeigt werden, der Fachmann letztendlich realisiert, hängt vom Anwendungsfall ab.

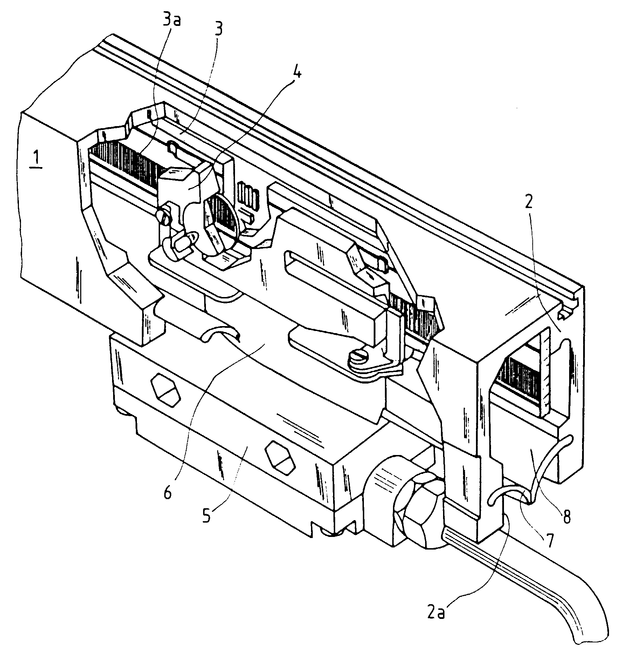

Anhand eines Ausführungsbeispieles soll die Erfindung nachstehend mit Hilfe der Zeichnung noch näher erläutert werden.

Es zeigt die einzige
- Figur: einen Ausschnitt einer Längenmeßeinrichtung mit Dichtlippen.

Eine in der Figur dargestellte Längenmeßeinrichtung 1 besteht im wesentlichen aus einem Leichtmetall-Gehäuse 2, in dem ein Meßteilungs-Trägerkörper 3 in bekannter Weise befestigt ist. Das Gehäuse 2 ist teilweise geschnitten dargestellt, so daß eine Abtasteinrichtung 4 sichtbar wird. Die Abtasteinrichtung 4 tastet in ebenfalls bekannter Weise photoelektrisch eine Meßteilung 3a ab, die auf dem Meßteilungs-Trägerkörper 3 aufgebracht ist. Ein Mitnehmer 5, der den Querschnitt eines zweiseitigen Schwertes hat, verbindet die Abtasteinrichtung 4 mit einem Montagefuß 6. Der Mitnehmer 5 durchragt einen Längsschlitz 2a im Gehäuse 2, der durch dachförmig angeordnete Dichtlippen 7 und 8 abgedichtet ist.

Eine nicht dargestellte Maschine, bei der die Verschiebungen zwischen Maschinenbett und Schlitten gemessen werden sollen, trägt am Maschinenbett über Montagefuß 6 und Mitnehmer 5 die Abtasteinrichtung 4 und am Schlitten das Gehäuse 2 mit dem Meßteilungs-Trägerkörper 3.

Wie eingangs beschrieben, dienen die Dichtlippen 7 und 8 zur Abdichtung des Gehäuse-Längsschlitzes 2a.

Zur elektrischen Abschirmung gegenüber äußeren Störfeldern sind die elastischen Dichtlippen 7 und 8 elektrisch leitfähig ausgeführt. Dies kann durch Zugabe von elektrisch leitfähigen Partikeln in den Dichtelemente-Werkstoff erfolgen oder durch einen elektrisch leitfähigen, elastischen Überzug. Bei diesen Ausführungsformen kann durch den Fluß von elektrischem Strom in den Dichtelementen 7 und 8 ein steuerbares Magnetfeld erzeugt werden. Wenn diese Ausführungsform gewählt wird, so kann sich eine magnetische Flüssigkeit im Dichtspalt befinden - wie an sich bekannt ist -, die die Abdichtung noch verbessert.

Die Verwendung von elektrisch leitfähigen Dichtelementen 7 und 8 bietet besondere Vorteile, wenn gleichzeitig zur Abschirmung noch Zusatzfunktionen wie das bereits erwähnte Magnetfeld oder eine Heizung der Dichtlippen erwünscht ist. Mit Hilfe der Heizung kann in gewissen Grenzen die Kondensation von Feuchtigkeit im Gehäuse beeinflußt werden. Dies kann ganz erheblich zur Betriebssicherheit beitragen.

Das Gehäuse 2 kann selbstverständlich auch aus nichtmetallischem Werkstoff bestehen, wobei es in diesem Fall zur Verbesserung der elektrischen Abschirmung mit einem elektrisch leitfähigen Überzug versehen sein kann, oder es können seinem Werkstoff elektrisch leitfähige Partikel beigemischt sein, wie bereits bei der Ausführung der Dichtlippen beschrieben wurde.

## Patentansprüche

1. Gekapselte Positionsmeßeinrichtung (1) zur Messung der Relativlage zweier zueinander beweglicher Objekte, deren mit einem der zu messenden Objekte verbindbares Gehäuse (2) an zumindest einer Seite einen, im Verwendungsfall in Bewegungsrichtung des beweglichen Objektes verlaufenden Schlitz aufweist, durch den ein mit dem anderen Objekt verbindbarer Mitnehmer (5) in das Innere des Gehäuses hineinragt, der seinerseits mit einer im Gehäuse (5) untergebrachten, zur Positionsmessung dienenden Baueinheit verbunden ist, wobei der Schlitz mittels längs des Schlitzes angeordneter, elastischer Dichtelemente (7, 8) durchgehend abgedichtet ist, durch die der Mitnehmer (5) hindurchgreift, dadurch gekennzeichnet, daß die elastischen Dichtelemente (7, 8) einstückig sind und aus elektrisch leitfähigem, nichtmetallischem Werkstoff in Form von Lamellen bestehen.

2. Gekapselte Positionsmeßeinrichtung (1) nach Anspruch 1, dadurch gekennzeichnet, daß die elastischen Dichtelemente (7, 8) aus leitfähigem Kunststoff bestehen.

3. Gekapselte Positionsmeßeinrichtung (1) nach Anspruch 1, dadurch gekennzeichnet, daß die elastischen Dichtelemente (7, 8) aus leitfähigem Gummi bestehen.

4. Gekapselte Positionsmeßeinrichtung (1) nach Anspruch 1, dadurch gekennzeichnet, daß die Leitfähigkeit durch Zugabe von leitenden Partikeln in den Dichtelemente-Werkstoff erzielt wird.

5. Gekapselte Positionsmeßeinrichtung (1) zur Messung der Relativlage zweier zueinander beweglicher Objekte, deren mit einem der zu messenden Objekte verbindbares Gehäuse (2) an zumindest einer Seite einen, im Verwendungsfall in Bewegungsrichtung des beweglichen Objektes verlaufenden Schlitz aufweist, durch den ein mit dem anderen Objekt verbindbarer Mitnehmer (5) in das Innere des Gehäuses hineinragt, der seinerseits mit einer im Gehäuse (5) untergebrachten, zur Positionsmessung dienenden Baueinheit verbunden ist, wobei der Schlitz mittels längs des Schlitzes angeordneter, elastischer Dichtelemente (7, 8) durchgehend abgedichtet ist, durch die der Mitnehmer (5) hindurchgreift, dadurch gekennzeichnet, daß die elastischen Dichtelemente (7, 8) einstückig sind und aus nichtmetallischem Werkstoff in Form von Lamellen bestehen, die durch einen leitfähigen elastischen nichtmetallischen Überzug elektrisch leitfähig sind.

6. Gekapselte Positionsmeßeinrichtung (1) nach Anspruch 1 oder 5, dadurch gekennzeichnet, daß das Gehäuse (2) aus Metall oder einem elektrisch leitenden nichtmetallischen Werkstoff besteht und durch die Abschirmung mit den elektrisch leitfähigen Dichtelementen (7, 8) einen Faradykäfig bildet.

7. Gekapselte Positionsmeßeinrichtung (1) nach einem der Ansprüche 1 bis 6, dadurch gekennzeichnet, daß das Gehäuse (2) und die Dichtelemente (7, 8) elektrisch leitend miteinander verbunden sind.

8. Gekapselte Positionsmeßeinrichtung (1) nach einem der Ansprüche 1 bis 7, dadurch gekennzeichnet, daß sich als zusätzliches Dichtungsmedium Magnetflüssigkeit im Dichtspalt befindet.

## Claims

1. An encapsulated position measuring device (1), for measuring the relative position of two objects movable with respect to one another, whose housing (2) which can be connected to one of the objects to be measured has a slot at at least one side running in the direction of movement of the object which is movable in the case in question, through which slot a drive carrier (5) which can be connected to the other object projects into the interior of the housing and is for its part connected to a unit fitted in the housing (2) and serving for the position measurement, wherein the slot is sealed throughout by means of elastic sealing elements (7, 8) arranged along the slot and through which the drive carrier (5) engages, characterized in that the elastic sealing elements (7, 8) are in one piece and consist of electrically conductive, non-metallic material in the form of lamellae.

2. An encapsulated position measuring device (1) according to claim 1, characterized in that the elastic sealing elements (7, 8) consist of conductive plastics material.

3. An encapsulated position measuring device (1) according to claim 1, characterized in that the elastic sealing elements (7, 8) consist of conductive rubber.

4. An encapsulated position measuring device (1) according to claim 1, characterized in that the conductivity is achieved by addition of conductive particles in the material of the sealing elements.

5. An encapsulated position measuring device (1), for measuring the relative position of two objects movable with respect to one another, whose housing (2) which can be connected to one of the objects to be measured has a slot at at least one side running in the direction of movement of the object which is movable in the case in question, through which slot a drive carrier (5) which can be connected to the other object projects into the interior of the housing and is for its part connected to a unit fitted in the housing (2) and serving for position measurement, wherein the slot is sealed throughout by means of elastic sealing elements (7, 8) arranged along the slot and through which the drive carrier (5) engages, characterized in that the elastic sealing elements (7, 8) are in one piece and consist of non-metallic material in the form of lamellae which are electrically conductive through a conductive, elastic, non-metallic coating.

6. An encapsulated position measuring device (1) according to claim 1 or 5, characterized in that the housing (2) consists of metal or an electrically conducting, non-metallic material and forms a Faraday cage through the screening by the electrically conductive sealing elements (7, 8).

7. An encapsulated position measuring device (1) according to any of claims 1 to 6, characterized in that the housing (2) and the sealing elements (7, 8) are electrically conductively connected together.

8. An encapsulated position measuring device (1) according to any of claims 1 to 7, characterized in that magnetic liquid is located in the sealing gap as an additional sealing medium.

## Revendications

1. Dispositif étanche de mesure de position (1) pour la mesure de la position relative de deux objets mobiles l'un par rapport à l'autre, dispositif dont l'enveloppe (2) susceptible d'être reliée à l'un des objets à mesurer présente au moins sur un côté une fente s'étendant, lors de l'utilisation, suivant la direction de déplacement de l'objet mobile, fente à travers laquelle un entraîneur (5) susceptible d'être relié à l'autre objet pénètre à l'intérieur de l'enveloppe, cet entraîneur étant à son tour relié à un composant disposé à l'intérieur de l'enveloppe (5) et servant à la mesure, la fente étant fermée de façon étanche, sur toute sa longueur, à l'aide d'éléments d'étanchéité (7, 8) élastiques, qui sont disposés le long de la fente et entre lesquels passe l'entraîneur (5), caractérisé par le fait que les éléments d'étanchéité (7, 8) élastiques sont réalisés d'une seule pièce et sont constitués par un matériau non métallique conducteur de l'électricité, sous la forme de lamelles.

2. Dispositif étanche de mesure de position (1) suivant la revendication 1, caractérisé par le fait que les éléments d'étanchéité (7, 8) élastiques sont constitués par de la matière plastique conductrice.

3. Dispositif étanche de mesure de position (1) suivant la revendication 1, caractérisé par le fait que les éléments d'étanchéité (7, 8) élastiques sont constitués par du caoutchouc conducteur.

4. Dispositif étanche de mesure de position (1) suivant la revendication 1, caractérisé par le fait que la conductivité est obtenue par l'addition de particules conductrices au matériau des éléments d'étanchéité.

5. Dispositif étanche de mesure de position (1) pour la mesure de la position relative de deux objets mobiles l'un par rapport à l'autre, dispositif dont l'enveloppe (2) susceptible d'être reliée à l'un des objets à mesurer présente au moins sur un côté une fente s'étendant, lors de l'utilisation, suivant la direction de déplacement de l'objet mobile, fente à travers laquelle un entraîneur (5) susceptible d'être relié à l'autre objet pénètre à l'intérieur de l'enveloppe, cet entraîneur étant à son tour relié à un composant disposé à l'intérieur de l'enveloppe (5) et servant à la mesure, la fente étant fermée de façon étanche, sur toute sa longueur, à l'aide d'éléments d'étanchéité (7, 8) élastiques, qui sont disposés le long de la fente et entre lesquels passe l'entraîneur (5), caractérisé par le fait que les éléments d'étanchéité (7, 8) élastiques sont réalisés d'une seule pièce et sont constitués par un matériau non métallique sous la forme de lamelles rendues conductrices de l'électricité par un revêtement élastique conducteur non métallique.

6. Dispositif étanche de mesure de position (1) suivant la revendication 1 ou 5, caractérisé par le fait que l'enveloppe (2) est constituée de métal ou d'un matériau non métallique conducteur de l'électricité et constitue une cage de Faraday par le blindage avec les éléments d'étanchéité (7, 8) conducteurs de l'électricité.

7. Dispositif étanche de mesure de position (1) suivant l'une des revendications 1 à 6, caractérisé par le fait que l'enveloppe (2) et les éléments d'étanchéité (7, 8) sont reliés entre eux de façon conductrice de l'électricité.

8. Dispositif étanche de mesure de position (1) suivant l'une des revendications 1 ou 7, caractérisé par le fait que du liquide magnétique se trouve, en tant que milieu d'étanchéité supplémentaire, dans la fente d'étanchéité.
